# EUROPEAN PATENT APPLICATION

(11) **EP 1 767 973 A1**
(43) Date of publication of application: **28.03.2007**
(21) Application number: 05767415.2
(22) Date of filing: 26.07.2005
(51) Int. Cl.: G02B 7/28, G03B 13/36, H04N 5/225, H04N 5/232

(54) **PORTABLE TELEPHONE AND AUTOFUCUSING METHOD**

(30) Priority: 27.07.2004 JP 2004218573
(71) Applicant: MATSUSHITA ELECTRIC INDUSTRIAL CO., LTD., Osaka 571-8501 (JP)
(72) Inventor: IDO, Daiji c/o Matsushita Ele. Co., Ltd. IPRO Co., Chuo-ku, Osaka 540-6319 (JP)
(74) Representative: Grünecker, Kinkeldey, Stockmair & Schwanhäusser Anwaltssozietät
(86) International application number: PCT/JP2005/013668
(87) International publication number: WO 2006/011492

(57) **Abstract**

A portable telephone whose focusing operation is facilitated, with which missing of an opportunity of snapping can be prevented, and whose usability is improved. In the portable telephone, a camera section (101) images an object displayed on a display section (108). An autofocus region selection section (104) has a group of pressing switches that are of the same number as the number of autofocus regions, and the pressing switches are in one-to-one correspondence with the autofocus regions. The autofocus region selection section (104) selects the autofocus region in which the number that is same as the number of a pressed switch is displayed. An autofocus section (105) focuses on an object displayed in the selected autofocus region. The display section (108) displays preview images divided into the autofocus regions and displays different numbers for each of the autofocus regions.

## Description

### Technical Field

The present invention relates to a mobile phone with a camera and an autofocus method for this mobile phone.

### Background Art

Conventionally, as a technique for focusing on the main subject, there has been known a technique for selecting, upon photographing an image, a desired autofocus area from a plurality of autofocus areas to focus on the main subject. Autofocus area is an area for obtaining information upon focus adjustment such as a focus detection point or a distance measuring point. It is often the case that, in a digital camera, the autofocus area is displayed not on a viewfinder but on an image (hereinafter, referred to as a "preview image") of a photographing object displayed on a display apparatus such as a liquid crystal screen. In a camera having such an autofocus area, there are two main methods of selecting an autofocus area: a manual selection scheme and an automatic selection scheme.

The automatic selection scheme is a system in which an optimum autofocus area is automatically selected without a photographer selecting an autofocus area. However, there is a problem that, an autofocus area that is not intended by the photographer may be selected when there are a plurality of subjects.

The manual selection scheme is to solve the problem that a subject that is not intended by the photographer may be selected, and is to specify a desired autofocus point moving direction by a manual operation. According to this system, upon photographing, the main subject intended by the photographer can be properly brought into focus (e.g., Patent Document 1). For the manual selection scheme, there is, for example, a method of selecting a desired subject by a photographer selecting one of a plurality of autofocus areas displayed on a viewfinder by a dial button or a method of selecting a desired subject by a photographer selecting one of a plurality of autofocus areas displayed on a viewfinder by moving in turn a cursor up, down, left, and right on an area-by-area basis by buttons disposed at four points, up, down, left, and right.
Patent Document 1: Japanese Patent Application Laid-Open No.2001-350085

### Disclosure of Invention

### Problems to be Solved by the Invention

However, in conventional apparatuses, when a plurality of autofocus areas are set, a photographer needs to move a cursor in turn on an area-by-area basis until the main subject intended by the photographer is selected, and thus, there is a problem that the operation is cumbersome. Furthermore, in conventional apparatuses, when the number of autofocus areas is increased, it takes time for a desired autofocus area to be selected and thus prompt photographing cannot be performed, causing a problem of missing a photo opportunity. If an autofocus area is fixed to prevent missing of a photo opportunity, since autofocus area is fixed in a certain position, a photographer cannotfreelymakea composition. Thus, the composition needs to be changed by moving the camera itself after a focus has been adjusted, causing a problem of poor usability.

An object of the present invention is therefore to provide a mobile phone and an autofocus method that are capable of facilitating an operation of focusing on, preventing missing of a photo opportunity, and improving usability.

### Means for Solving the Problem

A mobile phone according to the present invention adopts a configuration including: a display section that displaying an image of a photographing object such that the image is divided into a plurality of areas; a selection section that selecting any of the areas based on an instruction from a user; an autofocus section that performing an autofocus process on the area selected by the selection section; and a photographing section that photographing the photographing object displayed on the display section with the area being brought into focus by the autofocus section.

An autofocus method according to the present invention includes: displaying an image of a photographing object on a display screen such that the image is divided into a plurality of areas; selecting any of the areas by switches having a one-to-one correspondence with the areas; and focusing on the selected area.

### Advantageous Effect of the Invention

According to the present invention, an operation of focusing on can be facilitated, missing of a photo opportunity can be prevented, and usability can be improved.

### Brief Description of Drawings

FIG.1 is a block diagram showing a configuration of a mobile phone according to an embodiment of the present invention;
FIG.2 is a view showing an external appearance of the mobile phone according to an embodiment of the present invention; and
FIG.3 is a flowchart showing an operation of the mobile phone according to an embodiment of the present invention.

### Best Mode for Carrying Out the Invention

An embodiment of the present invention will be described in detail below with reference to the drawings.

### (Embodiment)

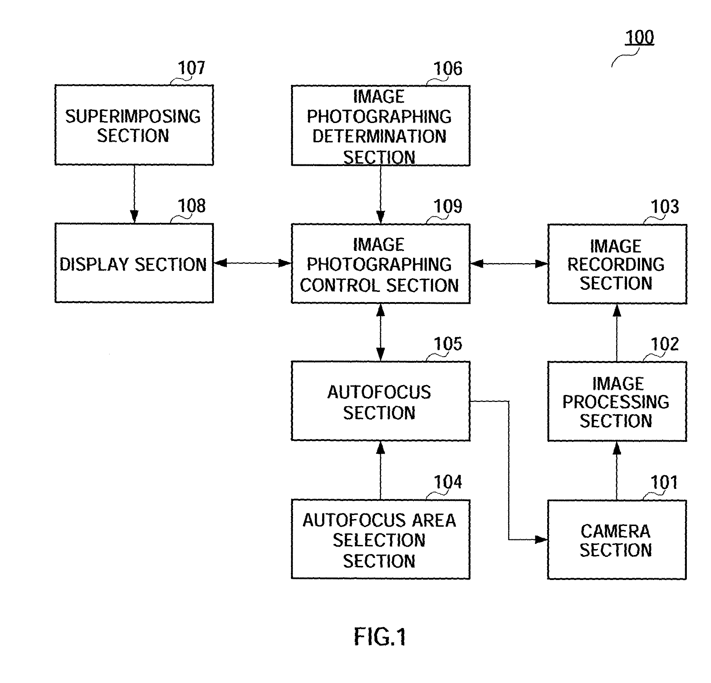

FIG.1 is a block diagram showing a configuration of mobile phone 100 according to an embodiment of the present invention.

Camera section 101 photographs, with a desired photographing object being brought into focus by autofocus section 105 (described later), the photographing object displayed on display section 108 as a preview image. Camera section 101 then outputs image data of the photographed image to image processing section 102.

Image processing section 102 performs predetermined data processing on the image data inputted from camera section 101 and outputs the processed image data to image recording section 103.

Image recording section 103 records the image data of the photographed image inputted from image processing section 102, based on an instruction from image photographing control section 109, and outputs information related to record of the image data to image photographing control section 109.

Autofocus area selection section 104 which is a selection section selects a desired autofocus area from a plurality of autofocus areas and outputs information on the selected autofocus area to autofocus section 105. Autofocus area selection section 104 has, for example, a group of press switches provided in the same number as the number of autofocus areas so as to have a one-to-one correspondence between autofocus areas and the press switches. Autofocus area selection section 104 selects an autofocus area in which the same number as the number of a switch pressed is displayed.

Based on an instruction from image photographing control section 109, and from the information on autofocus area inputted from autofocus area selection section 104, autofocus section 105 sets the autofocus area selected by autofocus area selection section 104 as a focus measurement area, and makes an adjustment to focus on the photographing object displayed in the area selected by auto focus area selection section 104. Then, autofocus section 105 controls camera section 101 to perform photographing at the adjusted focus and outputs information related to the adjusted focus to image photographing control section 109.

Image photographing determination section 106 determines timing at which the image is photographed, and outputs information on the determined timing to image photographing control section 109.

Superimposing section 107 generates a superimposed image in which a lattice frame for dividing the preview image into segments and number display for designating autofocus areas by numbers are superimposed on top of each other, such that each area number is displayed in each lattice frame. Superimposing section 107 then outputs data of the superimposed image to display section 108.

Display section 108 performs, based on an instruction from image photographing control section 109, display such that the superimposed image inputted from superimposing section 107 is superimposed on the preview image, and outputs information related to the display to image photographing control section 109.

Image photographing control section 109 performs control of image photographing based on the information on the timing inputted from image photographing determination section 106, the information related to the record of the image data inputted from image recording section 103, the information related to the focus inputted from autofocus section 105, and the information related to the display inputted from display section 108, and provides an instruction to image recording section 103 to record image data, an instruction to autofocus section 105 to adjust a focus, and an instruction to display section 108 to perform display.

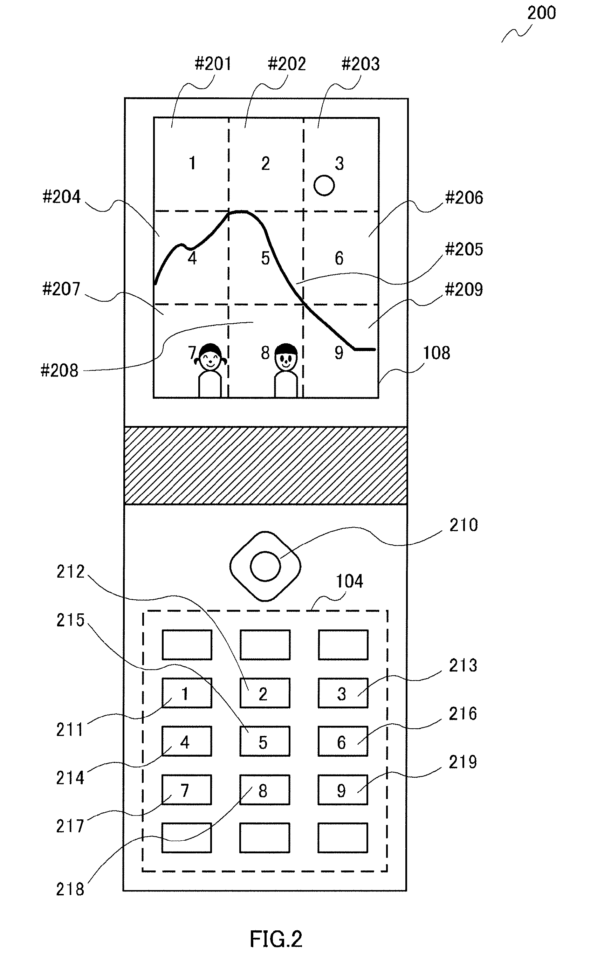

FIG.2 is a view showing an external appearance of mobile phone 200. Mobile phone 200 is a portable mobile terminal apparatus, for example, and includes all components of FIG.1.

In FIG.2, in mobile phone 200, in an operable state, camera section 101 (not shown), autofocus area selection section 104, and display section 108 are disposed in externally visible positions. Display section 108 is composed of a liquid crystal display, for example, and performs, in an image photographing mode which is a state of performing image photographing, display such that a superimposing image for selecting an autofocus area is superimposed on a preview image. In the case of FIG.2, the preview image is divided into nine autofocus areas #201 to #209 and sequential numbers 1 to 9 are displayed in autofocus areas #201 to #209, respectively.

Autofocus area selection section 104 includes buttons 211 to 219 which are press portions of press switches, and determination button 210 which is a shutter for starting a photographing process. In a non-image photographing mode which is a state of not performing image photographing, buttons 211 to 219 are used to specify an arbitrary order performed by a user selecting numbers, such as to specify a phone number of a calling party or to specify content when browsing a Web page or the like by connecting to a network such as the Internet. When button 211 is selected, autofocus area #201 is selected; when button 212 is selected, autofocus area #202 is selected; when button 213 is selected, autofocus area #203 is selected; when button 214 is selected, autofocus area #204 is selected; when button 215 is selected, autofocus area #205 is selected; when button 216 is selected, autofocus area #206 is selected; when button 217 is selected, autofocus area #207 is selected; when button 218 is selected, autofocus area #208 is selected; and when button 219 is selected, autofocus area #209 is selected. By a photographer pressing one of buttons 211 to 219 corresponding to a desired autofocus area to select one of autofocus areas #201 to #209, autofocus section 105 performs an autofocus process to focus on the one of autofocus areas #201 to #209 selected by the photographer. After the autofocus process, by the photographer pressing determination button 210, a photographing process starts.

For example, when button 215 having "5" provided on a surface thereof is pressed, autofocus area #205 in which "5" is displayed is selected and a focus adjustment is made. When button 218 having "8" provided on a surface thereof is pressed, autofocus area #208 in which "8" is displayed is selected and a focus adjustment is made. In the case of FIG.2, when autofocus area #205 is selected, a background is brought into focus and when autofocus area #208 is selected, a person is brought into focus. Therefore, even in the same composition, an image can be photographed at different focuses according to the intention of the photographer. A situation can be considered, for example, in which to emphasize the person more, button 218 is selected and pressed to select autofocus area #208 as an autofocus area and a focus is adjusted.

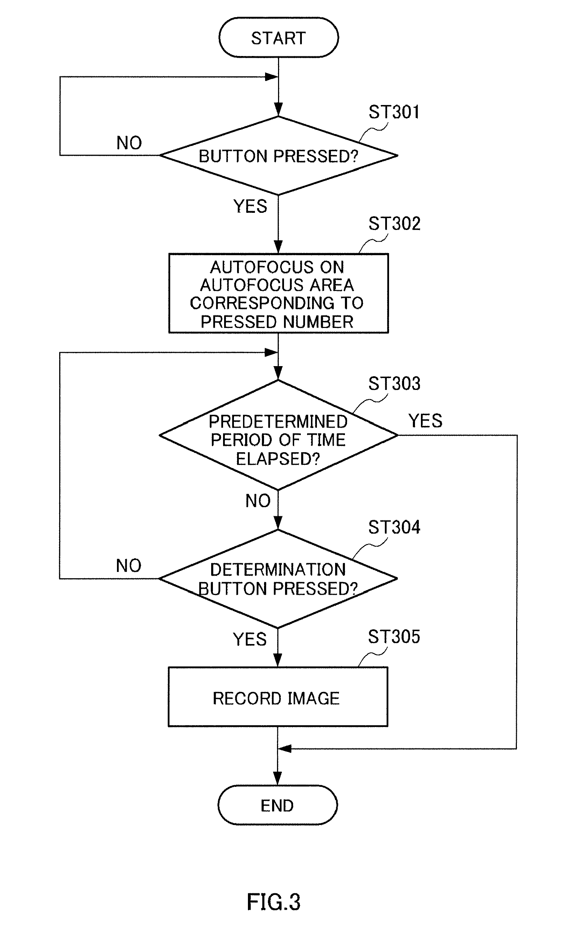

The operation of mobile phone 100 will be described using FIG.3. FIG.3 is a flowchart showing the operation of mobile phone 100.

Autofocus area selection section 104 determines whether any of buttons 211 to 219 has been pressed (step ST301) . If it is determined that any of buttons 211 to 219 has been pressed, then autofocus section 105 automatically focuses on one of autofocus areas #201 to #209 having the same number as the number of one of buttons 211 to 219 having been pressed (step ST302). Then, autofocus area selection section 104 determines whether a predetermined period of time has elapsed since the one of buttons 211 to 219 was pressed (step ST303). If the predetermined period of time has not elapsed, autofocus area selection section 104 determines whether determination button 210 has been pressed (step ST304). If determination button 210 has been pressed, camera section 101 performs photographing and image recording section 103 records a photographed image (step ST305).

On the other hand, if it is determined that none of buttons 211 to 219 have been pressed in step ST301, autofocus area selection section 104 continues to monitor whether any of buttons 211 to 219 has been pressed at predetermined timing. If the predetermined period of time has elapsed in step ST303, autofocus area selection section 104 determines that an autofocus area has not been selected and terminates the process. If determination button 210 has not been pressed in step ST304, the operation of step ST303 is repeated.

As such, according to the present embodiment, by providing buttons 211 to 219 having a one-to-one correspondence with the numbers of autofocus areas displayed superimposed on a preview image, a photographer can select an autofocus area just by comparing the preview image with buttons 211 to 219 and pressing one of buttons 211 to 219 having the same number as the number of a desired autofocus area displayed superimposed on the preview image. Thus, an operation of focusing on can be facilitated, missing of a photo opportunity can be prevented, and usability can be improved.

Although in the present embodiment determination button 210 is used to determine the start of a photographing process, the present invention is not limited thereto and when any of buttons 211 to 219 is pressed, an autofocus process may be performed and subsequently a photographing process may be performed. In addition, although in the present embodiment an autofocus area is selected by pressing any of buttons 211 to 219, the present invention is not limited thereto and it is possible to select an autofocus area using arbitrary selection section having a one-to-one correspondence with the numbers of autofocus areas displayed superimposed on a preview image.

The present application is based on Japanese Patent Application No.2004-218573, filed on July 27, the entire content of which is expressly incorporated by reference herein.

### Industrial Applicability

The present invention has advantageous effects that an operation of focusing on can be facilitated, missing of a photo opportunity can be prevented, and usability can be improved. The present invention is suitable for use in mobile phones.

## Claims

1. A mobile phone comprising:
a display section that displaying an image of a photographing object such that the image is divided into a plurality of areas;
a selection section that selecting any of the areas based on an instruction from a user;
an autofocus section that performing an autofocus process on the area selected by the selection section; and
a photographing section that photographing the photographing object displayed on the display section with the area being brought into focus by the autofocus section.

2. The mobile phone according to claim 1, wherein:
the display section displays different numbers for different areas such that the numbers are associated with the areas; and
the selection section has provided thereon same numbers as the numbers of the areas displayed on the display section and selects an area corresponding to any of the numbers specified by the user.

3. The mobile phone according to claim 1 or 2, further comprising a control section that controlling the autofocus section to perform an autofocus process on the selected area when any of the areas is selected by the selection section.

4. The mobile phone according to any one of claims 1 to 3, wherein the control section controls the photographing section to photograph the photographing object when any of the areas is selected by the selection section.

5. The mobile phone according to any one of claims 1 to 4, wherein the selection section is used to specify a phone number of a calling party in a non-image photographing mode.

6. An autofocus method comprising:
displaying an image of a photographing object on a display screen such that the image is divided into a plurality of areas;
selecting any of the areas by switches having a one-to-one correspondence with the areas; and
focusing on the selected area.
